# EUROPÄISCHE PATENTSCHRIFT

(11) **EP 3 816 355 B1**
(45) Veröffentlichungstag und Bekanntmachung des Hinweises auf die Patenterteilung: **27.09.2023**
(21) Anmeldenummer: 20201600.2
(22) Anmeldetag: 13.10.2020
(51) Int. Cl.: E03D 11/11, A47K 11/02, E03D 7/00

(54) **TRENNTOILETTE, TRENNTOILETTEN-SYSTEM UND VERWENDUNG**
SEPARATION TOILET, SEPARATION TOILET SYSTEM AND USE
TOILETTES SÉPARÉES, SYSTÈME DE TOILETTES SÉPARÉES ET UTILISATION

(30) Priorität: 25.10.2019 DE 102019128862
(43) Veröffentlichungstag der Anmeldung: 05.05.2021
(73) Patentinhaber: Gerner, Sascha, 71272 Renningen (DE)
(72) Erfinder: Gerner, Sascha, 71272 Renningen (DE)
(74) Vertreter: Kohler Schmid Möbus Patentanwälte

(56) Entgegenhaltungen:
- WO-A1-2005/025397
- KR-B1- 101 487 860
- US-A- 4 254 515
- US-A- 4 633 535

## Beschreibung

Die Erfindung betrifft eine Trenntoilette mit einem Toilettengehäuse, einer Urin-Sammelschale und einer Fäzes-Sammelschale, wobei die Urin-Sammelschale mit einem ihr zugeordneten Urin-Sammelbehälter und die Fäzes-Sammelschale mit einem ihr zugeordneten Fäzes-Sammelbehälter verbunden und/oder verbindbar sind.

Eine Trenntoilette mit einer Urin- und einer Fäzes-Sammelschale ist beispielsweise aus der EP 584 132 B1 bekannt. Bei der bekannten Trenntoilette ist es vorgesehen, Urin und Fäzes getrennt zu sammeln. Insbesondere können Urin und mit Spülwasser versetzter Urin über unterschiedliche Abflussstrecken entsorgt werden. Entlang der zur Entsorgung des mit Spülwasser versetzten Urins vorgesehenen Abflussstrecke ist als Geruchsverschluss ein Siphon mit einer Sperrflüssigkeit vorgesehen. Zwischen den beiden Abflussstrecken kann mittels einer elektrisch betätigbaren Klappe ausgewählt werden. Zur Steuerung der Klappe weist die bekannte Trenntoilette Mikroschalter in einem Fußbodenbereich vor der Trenntoilette sowie im Bereich einer Sitzfläche der Trenntoilette auf, mit denen die Position eines Benutzers der Toilette bzw. eine aktuelle Benutzungsart der Trenntoilette ermittelbar sind. Dabei ist insbesondere vorgesehen, dass in einem inaktiven Zustand die Klappe die zweite, nicht durch den Siphon geruchsverschlossene, Abflussstrecke verdeckt und damit verschließt.

Aufgrund der Sperrflüssigkeit des Siphons lässt sich die bekannte Trenntoilette jedoch nur eingeschränkt für mobile Anwendungen nutzen. Auch ist die Funktionsfähigkeit des Siphons eingeschränkt, wenn die Sperrflüssigkeit einen zu niedrigen Stand aufweist, insbesondere bei Austrocknung, wenn sie eingefroren ist oder bei entsprechenden anderen Situationen.

Soll der in einem Urin-Sammelbehälter gesammelte Urin entsorgt werden, so muss der Urin-Sammelbehälter für den Transport zur Entsorgungsstelle zudem manuell verschlossen werden.

Ein Fluidsteuerventil sowie ein Urinal mit einem solchen Fluidsteuerventil sind aus der EP 1 579 133 B1 bekannt. Um die Funktionsfähigkeit des Fluidsteuerventils zu gewährleisten, ist dieses in einer vertikalen Lage zu verbauen.

Eine weitere Trenntoilette ist aus der WO 2005/025397 A1 bekannt.

Aufgabe der vorliegenden Erfindung ist es, eine für mobile Anwendungen besonders geeignete Trenntoilette anzubieten.

Gelöst wird die Aufgabe durch eine Trenntoilette mit den Merkmalen des Patentanspruchs 1.

Die Trenntoilette weist ein Rührwerk zur Umwälzung des Inhalts des Fäzes-Sammelbehälter auf, sodass eine Trocknung und/oder Kompostierung der Fäzes erleichtert, insbesondere beschleunigt, werden kann.

Dazu ist das Rührwerk ausschließlich am Fäzes-Sammelbehälter angeordnet und zusammen mit dem Fäzes-Sammelbehälter aus dem Toilettengehäuse der Trenntoilette entnehmbar. Zur Entnahme des Fäzes-Sammelbehälters brauchen dann eventuell verunreinigte Teile, beispielsweise eine der Sammelschalen, ein Deckel der Toilette, ein Toilettengehäuse oder dergleichen, nicht auseinandergebaut und/oder außerhalb der Trenntoilette abgelegt werden. Somit lassen sich Hygiene- und/oder Sauberkeitsprobleme, die sonst häufig beim Entleeren des Fäzes-Sammelbehälters auftreten, vermeiden.

Um die Trocknung der Fäzes zu verbessern, kann ein Trocknungsmaterial im Fäzes-Sammelbehälter eingefüllt sein. Das Trocknungsmaterial kann Kokosfasern aufweisen. Insbesondere kann das Trocknungsmaterial eingerichtet sein, die Trocknung und/oder die Kompostierung zu fördern und/oder eine Geruchsbildung zu hemmen. Das Trocknungsmaterial kann dazu insbesondere Granulat-artig ausgebildet sein.

Ein Lager für das Rührwerk kann an dem Fäzes-Sammelbehälter angeordnet sein. Insbesondere können Lagerstellen an gegenüberliegenden Seiten des Fäzes-Sammelbehälters angeordnet sein. Dadurch ist es besonders einfach möglich, den Fäzes-Sammelbehälter zusammen mit dem Rührwerk aus der Trenntoilette zu entnehmen.

An dem Fäzes-Sammelbehälter und am Toilettengehäuse der Trenntoilette sind korrespondierende Führungen, insbesondere Führungsflächen, angeordnet, die dafür sorgen, dass der Fäzes-Sammelbehälter beim Einsetzen automatisch in die richtige Position gelangt. Dabei können am Fäzes-Sammelbehälter vorgesehene Führungen symmetrisch angeordnet sein, sodass der Fäzes-Sammelbehälter in zwei unterschiedlichen Orientierungen eingesetzt werden kann und dennoch sicher, insbesondere formschlüssig, in der Trenntoilette angeordnet ist.

Die Führungen können im Bereich des oder der Lager für das Rührwerk angeordnet sein. Die Lager für das Rührwerk können auch als Führungen ausgebildet sein. Die Führungen am Fäzes-Sammelbehälter können V-förmig angeordnet sein, um ein automatisches Zentrieren des Fäzes-Sammelbehälters zu erreichen.

Zwischen der Urin-Sammelschale und dem Urin-Sammelbehälter kann ein Geruchsverschluss zur Vermeidung des Übertritts geruchsbildender Gase aus dem Urin-Sammelbehälter zur Urin-Sammelschale angeordnet sein. Insbesondere kann der Geruchsverschluss als mechanisches Rückschlagventil ausgebildet sein und/oder ein solches aufweisen, wobei das Rückschlagventil eingerichtet ist, sich ab einer Mindestmenge des zur Einleitung in den Urin-Sammelbehälter anstehenden Urins selbsttätig zu öffnen und sich sonst selbsttätig zu schließen.

Dem liegt der Gedanke zugrunde, es durch ein mechanisches Rückschlagventil zu ermöglichen, dass der zu sammelnde Urin selbsttätig von der Urin-Sammelschale in den Urin-Sammelbehälter gelangen kann, indem sich das Rückschlagventil geeignet selbsttätig öffnet und anschließend wieder schließt.

Da das Rückschlagventil solange geschlossen sein kann, solange kein Urin oder zumindest nicht die zur Öffnung des Rückschlagventils hinreichende Mindestmenge an Urin ansteht, können Gerüche nicht aus dem Urin-Sammelbehälter zur Urin-Sammelschale hin entweichen.

Die Mindestmenge kann durch die Art des verwendeten Rückschlagventils technisch bedingt sein, um ein sicheres Öffnen zu gewährleisten. Bevorzugt kann daher ein Rückschlagventil mit einer möglichst geringen Mindestmenge vorgesehen sein.

Da es zum Geruchsverschluss keiner Sperrflüssigkeit oder dergleichen bedarf, lässt sich die Trenntoilette besonders bei mobilen Anwendungen einsetzen.

Zur Steuerung des Rückschlagventils sind weder elektrischer Strom noch eine Steuerelektronik notwendig, sodass die Trenntoilette ortsunabhängig benutzt werden kann.

Aufgrund der getrennten Sammlung von Urin und Fäzes ist auch eine getrennte Entleerung der jeweiligen Sammelbehälter möglich.

Insbesondere für den Fäzes-Sammelbehälter ergeben sich dadurch lange Entleerungszyklusdauern. Wird lediglich Urin eingelagert, so kann auf eine Dauerbelüftung verzichtet werden.

Es hat sich ferner gezeigt, dass sich in der erfindungsgemäßen Trenntoilette und/oder in deren Umgebung in der Regel lediglich eine geringe Luftfeuchte ausbildet. Daher sind Luftwechsel in wesentlich geringerem Umfange als üblich erforderlich, weshalb die erfindungsgemäße Trenntoilette insgesamt besonders klein baubar ist.

Günstig ist auch, dass bei Nichtbenutzung der Trenntoilette der Urin-Sammelbehälter zumindest zur Urin-Sammelschale hin ununterbrochen gasdicht verschlossen sein kann. Insbesondere ist günstig, dass der Urin-Sammelbehälter zumindest zur Urin-Sammelschale hin selbsttätig verschließbar ausgebildet sein kann. Geruchsbelästigungen aufgrund eines aus Versehen unverschlossenen, manuell zur Urin-Sammelschale hin verschließbaren Urin-Sammelbehälters können somit erheblich reduziert oder gänzlich vermieden werden.

Insbesondere für mobile Anwendungen der erfindungsgemäßen Trenntoilette, beispielsweise in Land-, Luft- und/oder Wasserfahrzeugen und/oder in einer zur temporären Aufstellung eingerichteten und/oder mobilen Unterkunft, ist es besonders günstig, wenn der Urin- und/oder der Fäzes-Sammelbehälter abnehmbar an und/oder in der Trenntoilette angeordnet sind.

Denkbar ist, dass der Fäzes-Sammelbehälter einen Verschluss, insbesondere einen Geruchsverschluss aufweist. Der Verschluss des Fäzes-Sammelbehälters kann selbsttätig arbeitend ausgebildet sein. Er kann dazu einen Klappmechanismus aufweisen.

Das Rückschlagventil kann mit einem nur geringen Druck und/oder Kraftaufwand öffenbar sein. Somit kann bereits eine geringe Menge anstehenden Urins genügen, um den zur Öffnung des Rückschlagventils erforderlichen Druck zu erzeugen.

Dazu ist insbesondere denkbar, dass das Rückschlagventil durch die Schwerkraft des anstehenden Urins betätigbar ausgebildet und/oder angeordnet ist. Somit kann auf zusätzliche Sensoren oder dergleichen zur Feststellung, ob und/oder in welcher Menge Urin ansteht oder nicht, verzichtet werden. Gleichzeitig kann sichergestellt werden, dass die Urin-Sammelschale sicher entleert wird und dass insbesondere kein oder zumindest im Wesentlichen kein Urin in der Urin-Sammelschale zurückbleibt.

Das Rückschlagventil kann einen elastischen Leitungsabschnitt aufweisen. Der elastische Leitungsabschnitt kann aus Silikon, Latex und/oder einem anderen gummielastischen Material ausgebildet sein und/oder ein solches Material aufweisen. Der elastische Leitungsabschnitt kann zumindest abschnittsweise rohrförmig ausgebildet sein. Vorzugsweise kann der elastische Leitungsabschnitt in unbelastetem Zustand, das heißt, wenn kein Urin am Rückschlagventil ansteht, durch elastische Verengung seiner Wandung verschlossen sein. Sobald eine ausreichende Menge an Urin am Rückschlagventil ansteht, kann - bei geeigneter Auslegung des elastischen Leitungsabschnitts - die Wandung schwerkraftgetrieben aufgeweitet werden, sodass der Urin durch den Leitungsabschnitt hindurch und in den, beispielsweise unter dem elastischen Leitungsabschnitt befindlichen, Urin-Sammelbehälter gelangen kann.

Somit kann durch den elastischen Leitungsabschnitt ein durch die Schwerkraft des anstehenden Urins betätigbares Rückschlagventil ausgebildet sein. Bevorzugt kann dazu der elastische Leitungsabschnitt in einer vertikalen Lage verbaut sein.

Der Durchtritt des Urins durch das Rückschlagventil lässt sich verbessern, wenn der Urin-Sammelbehälter eine Belüftungsöffnung aufweist. Diese Belüftungsöffnung kann als Bohrung ausgebildet sein oder eine Bohrung aufweisen. Erfahrungsgemäß genügt hierzu ein Durchmesser von kleiner als 5 mm. Durch einen solchen engen Durchmesser kann ein ungewolltes Ausströmen von Urin, beispielsweise im Falle, dass der Urin-Sammelbehälter beim Transport umkippt, erheblich begrenzt werden.

Der Urin-Sammelbehälter kann einen Verschlussdeckel aufweisen. Vorzugsweise kann die Belüftungsöffnung am Verschlussdeckel und/oder am und/oder im Geruchsverschluss ausgebildet sein, sodass als Urin-Sammelbehälter ein handelsüblicher Behälter verwendet werden kann. Ferner kann der Verschlussdeckel lösbar am Urin-Sammelbehälter anordenbar sein. Beispielsweise kann der Verschlussdeckel auf den Urin-Sammelbehälter aufschraubbar und/oder aufsteckbar sein. Dann lässt sich, beispielsweise für eine Zwischenlagerung, der Urin-Sammelbehälter durch Austausch des Verschlussdeckels durch einen gasdichten Verschlussdeckel, insbesondere ohne Rückschlagventil und ohne Belüftungsöffnung, gasdicht verschließen.

Eine vollständige oder zumindest nahezu vollständige Entleerung der Urin-Sammelschale lässt sich erzielen, wenn die Urin-Sammelschale an ihrer im Einbauzustand tiefsten Stelle in das Rückschlagventil oder in eine zum Rückschlagventil führende Zuleitung mündet.

Zur Entleerung der Sammelbehälter sowie zum Verstauen der Trenntoilette in einem Stauraum bzw. zum Entnehmen der Trenntoilette aus dem Stauraum ist es günstig, wenn die Trenntoilette ein fahrbares Toilettengehäuse aufweist. Dazu kann das Toilettengehäuse an seiner Unterseite Räder, Rollen und/oder Kugeln zum Verlagern der Trenntoilette aufweisen. Das Toilettengehäuse kann ferner eine Haltemöglichkeit, beispielsweise einen Griff, aufweisen. Allgemein kann die Trenntoilette eine Rangierhilfe aufweisen. Die Rangierhilfe kann am Toilettengehäuse ausgebildet sein. Somit kann die Trenntoilette, selbst bei hohem Gewicht, beispielsweise wenn die Sammelbehälter weitgehend gefüllt sind, mit lediglich geringem Kraftaufwand rangiert werden. Die Trenntoilette kann somit mit geringem Kraftaufwand aus dem Stauraum entnommen werden oder in diesen zurückgebracht werden. Die Trenntoilette lässt sich somit auch von Kindern und Jugendlichen oder geschwächten Personen verlagern.

Die Urin-Sammelschale kann kippbar und/oder schwenkbar an der übrigen Trenntoilette, insbesondere am Toilettengehäuse, gelagert sein, und/oder die Fäzes-Sammelschale kann kippbar und/oder schwenkbar am Toilettengehäuse gelagert sein, sodass der Urin- und/oder der Fäzes-Sammelbehälter der Trenntoilette, beziehungsweise dem Toilettengehäuse, einfach entnehmbar sind.

In den Rahmen der Erfindung fällt des Weiteren ein Trenntoiletten-System, umfassend eine erfindungsgemäße Trenntoilette und einen Aufnahmeraum zur Aufnahme der Trenntoilette. Der Aufnahmeraum kann beispielsweise ein Toilettenraum und/oder ein Stauraum zur Verstauung der Trenntoilette sein.

Das Trenntoiletten-System, insbesondere der Aufnahmeraum, kann einen, vorzugsweise elektrischen, Lüfter aufweisen. Der Lüfter kann ein Abluftgebläse sein und/oder ein solches aufweisen. Der Lüfter kann mit einer, vorzugsweise elastischen, Manschette am Aufnahmeraum und/oder an der Trenntoilette angeschlossen und/oder anschließbar sein. Insbesondere kann sich die Manschette am Lüfter (fest mit dem Aufnahmeraum verbunden) bzw. am Ende eines Schlauches vom Lüfter befinden. Wenn die Toilette im Aufnahmeraum angeordnet ist (Parkposition), schließt die Manschette dicht am Gehäuse der Toilette ab. Dadurch ist kein Anschluss am Toilettengehäuse im eigentlichen Sinn nötig, sondern nur eine Belüftungsöffnung. Die Abdichtung Toilette/Anschlussleitung Lüfter erfolgt dann durch die Manschette. Die Manschette kann aus einem elastisch verformbaren Material ausgebildet sein und/oder ein solches aufweisen. Sie kann eingerichtet sein, luftdicht zu einer Außenseite der Manschette hin abzudichten. Sie kann an einer oder an beiden Stirnseiten eine Dichtung aufweisen. Die Manschette kann eingerichtet sein, zur Trenntoilette hin, insbesondere selbsttätig, abzudichten.

Vorzugsweise kann die Trenntoilette selbst lüfterfrei ausgebildet sein. Die Trenntoilette kann dadurch kabellos ausgebildet sein und/oder keine nach außen führenden Abluftleitungen oder dergleichen aufweisen. Die Trenntoilette lässt sich somit besonders einfach, insbesondere ohne auf Leitungen oder dergleichen Rücksicht nehmen zu müssen, verlagern.

Der Lüfter des Trenntoiletten-Systems, der insbesondere zur Belüftung des Fäzes-Sammelbehälters eingerichtet ist, kann einen Sensor, insbesondere einen Feuchtigkeitssensor, aufweisen. Dadurch wird ein selbsttätig geschalteter Betrieb des bzw. der Lüfter ermöglicht. Dadurch kann Energie eingespart und/oder Lärm reduziert werden.

Das Trenntoiletten-System und/oder die Trenntoilette können alternativ oder ergänzend auch über ein oder mehrere Lüftungsöffnungen belüftbar sein. Auch können sie alternativ und/oder ergänzend über Spaltabstände, beispielsweise aufgrund von Fertigungstoleranzen bei beweglichen Teilen des Trenntoiletten-Systems und/oder der Trenntoilette, belüftbar sein.

Der Lüfter kann über wenigstens eine der Lüftungsöffnungen an den Aufnahmeraum und/oder an die Trenntoilette angeschlossen sein. Der Anschluss kann mittels der Manschette erfolgen.

Ferner fällt in den Rahmen der Erfindung eine Verwendung der erfindungsgemäßen Trenntoilette und/oder des erfindungsgemäßen Trenntoiletten-Systems in einem Land-, Luft- und/oder Wasserfahrzeug und/oder in einer zur temporären Aufstellung eingerichteten und/oder mobilen Unterkunft.

Für einen solchen mobilen Einsatz kann dabei besonders ausgenutzt werden, dass die Trenntoilette als Geruchsverschluss ein mechanisches Rückschlagventil aufweist und dadurch problemlos transportiert werden kann.

Sie benötigt ferner keinen festen Anschluss an ein bestehendes kommunales Abwassersystem oder dergleichen, sodass die Trenntoilette auch unterwegs benutzt werden kann. Durch die Vermeidung störender Gerüche lassen sich die Trenntoilette bzw. das Trenntoiletten-System selbst bei langen Standzeiten komfortabel nutzen. Dabei ist es für einen solchen mobilen Einsatz auch günstig, dass die Sammelbehälter aufgrund der getrennten Sammlung von Urin und Fäzes vergleichsweise selten geleert werden brauchen.

Weitere Merkmale und Vorteile der Erfindung ergeben sich aus der nachfolgenden detaillierten Beschreibung der Ausführungsbeispiele der Erfindung, anhand der Figuren der Zeichnung, sowie aus den Ansprüchen.

Die in der Zeichnung dargestellten Merkmale sind derart dargestellt, dass die erfindungsgemäßen Besonderheiten deutlich sichtbar gemacht werden können.

Es zeigen:
- Fig. 1: eine schematische Darstellung eines Trenntoiletten-Systems und
- Fig. 2: eine schematische Querschnittsansicht eines Rückschlagventils.

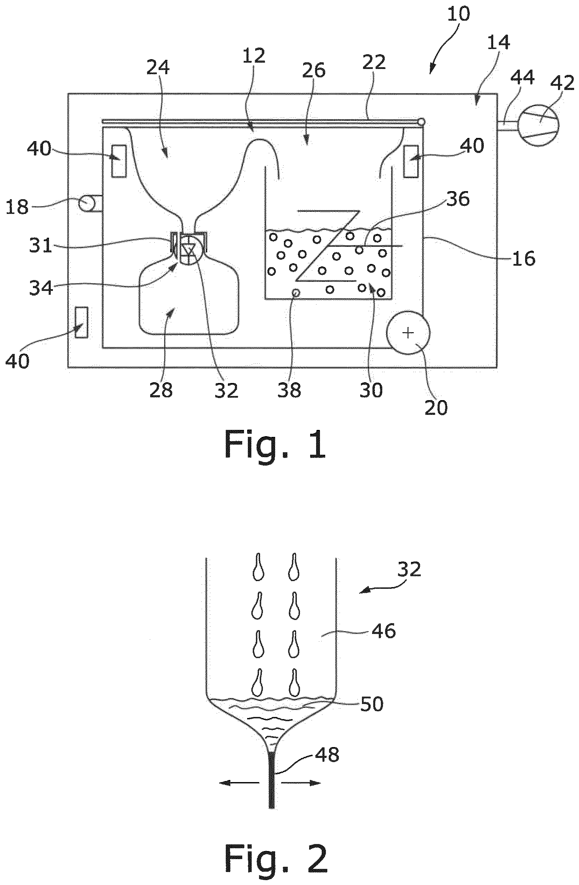

**Fig. 1** zeigt ein Trenntoiletten-System **10** mit einer Trenntoilette **12,** die im in Fig. 1 dargestellten Zustand in einem Aufnahmeraum **14** des Trenntoiletten-Systems 10 aufgenommen ist. Der Aufnahmeraum 14 fungiert dazu als Stauraum. Der Aufnahmeraum 14 ist öffenbar bzw. verschließbar, sodass die Trenntoilette 12 dem Aufnahmeraum 14 zur Benutzung und/oder zur Entleerung entnommen und anschließend wieder im Aufnahmeraum 14 verstaut werden kann.

Zur Erleichterung der Entnahme der Trenntoilette 12 aus dem Aufnahmeraum 14 weist die Trenntoilette 12 ein Toilettengehäuse **16** mit einem Griff **18** und mit mehreren Rädern, von denen in Fig. 1 ein Rad **20** abgebildet ist, auf. Das Toilettengehäuse 16 ist somit fahrbar.

Unterhalb eines Toilettendeckels **22,** der schwenkbar am Toilettengehäuse 16 angeordnet sein kann, weist die Trenntoilette 12 eine Urin-Sammelschale **24** und eine Fäzes-Sammelschale **26** auf. Die beiden Sammelschalen 24, 26 dienen jeweils zur getrennten Aufnahme von Urin bzw. Fäzes eines Benutzers der Trenntoilette 12. Die Urin- und die Fäzes-Sammelschalen 24, 26 münden jeweils in Sammelbehälter, insbesondere in einen Urin-Sammelbehälter **28** und einen Fäzes-Sammelbehälter **30.**

Im Bereich eines Verschlussdeckels **31** befindet sich ein Rückschlagventil **32, das** die Urin-Sammelschale 24 mit dem Urin-Sammelbehälter 28 unidirektional verbindet. Insbesondere kann Urin von der Urin-Sammelschale 24 in den Urin-Sammelbehälter 28, nicht aber umgekehrt, fließen.

Insbesondere mündet die Urin-Sammelschale 24 an ihrer im Einbauzustand tiefsten Stelle in das Rückschlagventil 32.

Wie noch in Bezug auf Fig. 2 näher beschrieben wird, dient das Rückschlagventil 32 als Geruchsverschluss. Es ist eingerichtet, sich abhängig von der Menge des zur Einleitung in den Urin-Sammelbehälter 28 anstehenden Urins (in Fig. 1 nicht dargestellt) selbsttätig zu öffnen oder zu schließen. Insbesondere ist es eingerichtet, sich ab einer Mindestmenge des zur Einleitung in den Urin-Sammelbehälter 28 anstehenden Urins 50 selbsttätig zu öffnen und sich sonst selbsttätig zu schließen.

Das Rückschlagventil 32 ist in einer vertikalen Lage zwischen der Urin-Sammelschale 24 und dem Urin-Sammelbehälter 28 angeordnet. Somit kann zu sammelnder Urin von oben in das Rückschlagventil 32 einströmen und nach unten durch das Rückschlagventil 32 hindurchfließen.

Der am Rückschlagventil 32 anstehende Urin kann somit von der Urin-Sammelschale 24 in den Urin-Sammelbehälter 28 gelangen, wohingegen ein Rückstrom von Gerüchen, Ausgasungen oder dergleichen vom Urin-Sammelbehälter 28 in die Urin-Sammelschale 24 oder über die Urin-Sammelschale 24 hinaus durch das Rückschlagventil 32 verhindert wird.

Der Urin-Sammelbehälter 28 weist eine Belüftungsöffnung **34** auf. Die Belüftungsöffnung 34 ist am Verschlussdeckel 31 ausgebildet. Die Belüftungsöffnung 34 ist dazu als Bohrung ausgebildet, die insbesondere durch das Rückschlagventil 32 hindurch und/oder an diesem vorbei führen kann, um bis zum Innenraum des Urin-Sammelbehälters 28 zu reichen. Sie weist einen Durchmesser von 0,7 mm auf.

Der Fäzes-Sammelbehälter 30 ist mit einem Rührwerk **36** ausgestattet. Das Rührwerk 36 ist dazu ausschließlich am Fäzes-Sammelbehälter 30 und nicht am Toilettengehäuse 16 angeordnet.

Der Fäzes-Sammelbehälter 30 ist teilweise mit einem Trocknungsmaterial **38** befüllt. Das Trocknungsmaterial 38 ist Granulat-artig ausgebildet. Das Trocknungsmaterial 38 ist eingerichtet, eingelagerte Fäzes zu trocknen. Denkbar ist auch, dass das Trocknungsmaterial 38 zur Förderung der Kompostierung von Fäzes eingerichtet ist. Dazu kann es wenigstens einen Kompostierungsbeschleuniger enthalten.

Das Rührwerk 36 ist eingerichtet, in den Fäzes-Sammelbehälter 30 gelangende Fäzes mit dem Trocknungsmaterial 38 zu vermengen. Somit lassen sich die Fäzes beschleunigt trocknen und unerwünschte Ausdünstungen vermeiden.

Das Rührwerk 36 ist manuell betreibbar. Alternativ ist auch denkbar, dass das Rührwerk 36 durch eine in Fig. 1 nicht dargestellte Steuereinheit zeitgesteuert und/oder sensorgesteuert betreibbar ist. Denkbar ist insbesondere, dass im und/oder am Fäzes-Sammelbehälter 30 ein Fäzes-Sensor angeordnet ist, der den Eintritt von Fäzes in den Fäzes-Sammelbehälter 30 detektiert. Somit kann bei dieser Alternative das Rührwerk 36 jeweils nach Eintritt von Fäzes in den Fäzes-Sammelbehälter 30 eine vordefinierte Zeitdauer und/oder über eine vordefinierte Anzahl von Umdrehungen hinweg, insbesondere selbsttätig, betrieben werden.

Um die Entnahme des Urin-Sammelbehälters 28 sowie des Fäzes-Sammelbehälters 30 zu erleichtern, sind die jeweils zugeordneten Sammelschalen 24, 26 drehbar und/oder schwenkbar am Toilettengehäuse 16 angeordnet, insbesondere angelenkt.

Ferner ist das Rührwerk 36 ausschließlich am Fäzes-Sammelbehälter 30 angeordnet. Der Fäzes-Sammelbehälter 30 kann zusammen mit dem Rührwerk 36 dem Toilettengehäuse 16 entnommen werden.

Die Trenntoilette 12 wird mittels zweier Lüftungsöffnungen **40** ihres Toilettengehäuses 16 belüftet. Des Weiteren weist der Aufnahmeraum 14 wenigstens eine Lüftungsöffnung 40 auf.

Der Aufnahmeraum 14 kann mittels eines Lüfters **42,** der über eine Manschette **44** an den Aufnahmeraum 14 angeschlossen ist, entlüftet werden.

Denkbar ist insbesondere, dass der Lüfter 42 mit der Manschette 44 an eine der Lüftungsöffnungen 40, insbesondere des Aufnahmeraums 14, angeschlossen ist.

Der Lüfter 42 und die Manschette 44 sind an einer Außenseite des Aufnahmeraums 14 angeschlossen. Dazu befinden sie sich außerhalb des Aufnahmeraums 14. Denkbar ist auch, dass der Lüfter 42 und/oder die Manschette 44 an eine Innenseite des Aufnahmeraums 14 angeschlossen sind. Dazu können der Lüfter 42 und/oder die Manschette 44 im Aufnahmeraum 14 angeordnet sein. Die Manschette 44 kann sich zwischen dem Ende eines Schlauchs zum Lüfter 42 und dem Toilettengehäuse 16 befinden. Wenn die Toilette in den Aufnahmeraum 14 geschoben wird, schließt das Toilettengehäuse 16 dicht an der Manschette 44 ab. Dadurch ist an der Toilette selbst ein Anschluss und kein fest montierter Schlauch nötig. In der Parkposition schließt das Gehäuse 16 dicht an der Manschette 44 ab und das Innere der Toilette wird belüftet.

Der Lüfter 42 kann mittels eines Feuchtigkeitssensors (nicht dargestellt) in Abhängigkeit von der Luftfeuchte und/oder mittels eines geeigneten anderen Sensors anhand eines anderen Luftparameters wie beispielsweise der Temperatur und/oder einem Gehalt eines bestimmten Gases, steuerbar ausgebildet sein.

**Fig. 2** zeigt ein Beispiel eines Rückschlagventils 32 für eine Trenntoilette. Das Rückschlagventil 32 arbeitet rein mechanisch. Es weist einen gemäß seiner vertikalen Einbaulage oberen Leitungsabschnitt auf, der als Einlassbereich **46** zur Aufnahme von Urin **50** ausgebildet ist. Unterseitig grenzt ein elastischer Leitungsabschnitt **48** an den Einlassbereich 46 an.

Das Rückschlagventil 32 weist mit seinem Einlassbereich 46 und seinem elastischen Leitungsabschnitt 48 eine insgesamt trichterförmige Gestalt auf.

Der elastische Leitungsabschnitt 48 ist aus einem elastisch verformbaren Material, beispielsweise Latex und/oder Silikon, ausgebildet. In einem unbelasteten Zustand - ohne anstehenden Urin 50 - ist die Wandung des elastischen Leitungsabschnitts 48 so weit zusammengezogen, dass der elastische Leitungsabschnitt 48 fluiddicht verschlossen ist.

Somit kann kein Fluid, insbesondere kein Gas, von unten durch den elastischen Leitungsabschnitt 48 nach oben und damit durch das Rückschlagventil 32 hindurch strömen.

Fließt nun - wie in Fig. 2 gezeigt - Urin 50 in den Einlassbereich 46 des Rückschlagventils 32, so sammelt sich der Urin 50 in einem Bodenbereich des Einlassbereichs 46 und steht damit am elastischen Leitungsabschnitt 48 an. Durch die Schwerkraft des Urins 50 wird die Wandung des elastischen Leitungsabschnitts 48 geweitet. Dies ist in Fig. 2 mittels voneinander weg weisender Pfeile symbolisiert. Durch die Weitung des elastischen Leistungsabschnitts 48 öffnet sich das Rückschlagventil 32 somit selbsttätig, sobald eine - insbesondere von der Elastizität des elastischen Leitungsabschnitts 48 abhängige - Mindestmenge an Urin 50 ansteht.

Urin 50 fließt somit anschließend durch den elastischen Leitungsabschnitt 48 hindurch und kann dadurch in den unter dem Rückschlagventil 32 befindlichen Urin-Sammelbehälter 28 (Fig. 1) gelangen.

Unterhalb dieser Mindestmenge schließt sich das Rückschlagventil 32 dagegen selbsttätig.

### Bezugszeichenliste

- 10: Trenntoiletten-System
- 12: Trenntoilette
- 14: Aufnahmeraum
- 16: Toilettengehäuse
- 18: Griff
- 20: Rad
- 22: Toilettendeckel
- 24: Urin-Sammelschale
- 26: Fäzes-Sammelschale
- 28: Urin-Sammelbehälter
- 30: Fäzes-Sammelbehälter
- 31: Verschlussdeckel
- 32: Rückschlagventil
- 34: Belüftungsöffnung
- 36: Rührwerk
- 38: Trocknungsmaterial
- 40: Lüftungsöffnung
- 42: Lüfter
- 44: Manschette
- 46: Einlassbereich
- 48: elastischer Leitungsabschnitt
- 50: Urin

## Patentansprüche

1. **Trenntoilette** (12) mit einem Toilettengehäuse (16), einer Urin-Sammelschale (24) und einer Fäzes-Sammelschale (26) zur getrennten Aufnahme von Urin und Fäzes eines Benutzers der Trenntoilette (12), wobei die Urin-Sammelschale (24) in einen ihr zugeordneten Urin-Sammelbehälter (28) und die Fäzes-Sammelschale (26) in einen ihr zugeordneten Fäzes-Sammelbehälter (30) mündet, wobei die Trenntoilette (12) ein Rührwerk (36) zur Umwälzung des Inhalts des Fäzes-Sammelbehälters (30) aufweist, wobei das Rührwerk (36) ausschließlich am Fäzes-Sammelbehälter (30) und nicht am Toilettengehäuse (16) angeordnet ist und zusammen mit dem Fäzes-Sammelbehälter (30) aus dem Toilettengehäuse (16) entnehmbar ist, **dadurch gekennzeichnet, dass** an dem Fäzes-Sammelbehälter und am Toilettengehäuse (16) korrespondierende Führungen angeordnet sind, die dafür sorgen, dass der Fäzes-Sammelbehälter (30) beim Einsetzen automatisch in die richtige Position gelangt.

2. Trenntoilette nach Anspruch 1 , **dadurch gekennzeichnet, dass** ein Lager für das Rührwerk an dem Fäzes-Sammelbehälter (30) angeordnet ist.

3. Trenntoilette nach Anspruch einem der vorhergehenden Ansprüche, **dadurch gekennzeichnet, dass** zwischen der Urin-Sammelschale (24) und dem Urin-Sammelbehälter (28) ein Geruchsverschluss zur Vermeidung des Übertritts geruchsbildender Gase aus dem Urin-Sammelbehälter (28) zur Urin-Sammelschale (24) angeordnet ist.

4. Trenntoilette nach Anspruch 3, **dadurch gekennzeichnet, dass** der Geruchsverschluss als mechanisches Rückschlagventil (32) ausgebildet ist und/oder ein solches aufweist, wobei das Rückschlagventil (32) eingerichtet ist, sich ab einer Mindestmenge des zur Einleitung in den Urin-Sammelbehälter (28) anstehenden Urins (50) selbsttätig zu öffnen und sich sonst selbsttätig zu schließen.

5. Trenntoilette nach Anspruch 4, **dadurch gekennzeichnet, dass** das Rückschlagventil (32) durch die Schwerkraft des anstehenden Urins (50) betätigbar ausgebildet und/oder angeordnet ist.

6. Trenntoilette nach einem der vorhergehenden Ansprüche 4 oder 5, **dadurch gekennzeichnet, dass** das Rückschlagventil (32) einen elastischen Leitungsabschnitt (48) aufweist.

7. Trenntoilette nach einem der vorhergehenden Ansprüche, **dadurch gekennzeichnet, dass** der Urin-Sammelbehälter (28) eine Belüftungsöffnung (34) aufweist.

8. Trenntoilette nach einem der vorhergehenden Ansprüche 4 bis 7, **dadurch gekennzeichnet, dass** die Urin-Sammelschale (24) an ihrer im Einbauzustand tiefsten Stelle in das Rückschlagventil (32) oder in eine zum Rückschlagventil (32) führende Zuleitung mündet.

9. Trenntoilette nach einem der vorhergehenden Ansprüche, **dadurch gekennzeichnet, dass** das Toilettengehäuse (16) fahrbar ist.

10. Trenntoilette nach einem der vorhergehenden Ansprüche, **dadurch gekennzeichnet, dass** die Urin-Sammelschale (24) kippbar und/oder schwenkbar an der übrigen Trenntoilette (12), insbesondere am Toilettengehäuse (16), gelagert ist und/oder die Fäzes-Sammelschale (26) kippbar und/oder schwenkbar am Toilettengehäuse (16) gelagert ist.

11. **Trenntoiletten-System (10),** umfassend eine Trenntoilette (12) nach einem der vorhergehenden Ansprüche und einen Aufnahmeraum (14) zur Aufnahme der Trenntoilette (12).

12. Trenntoiletten-System nach dem vorhergehenden Anspruch, **dadurch gekennzeichnet, dass** der Aufnahmeraum (14) einen, vorzugsweise elektrischen, Lüfter (42) aufweist.

13. **Verwendung** einer Trenntoilette (12) nach einem der vorhergehenden Ansprüche 1 bis 10 und/oder eines Trenntoiletten-Systems (10) nach einem der Ansprüche 11 oder 12 in einem Land-, Luft- und/oder Wasserfahrzeug und/oder in einer zur temporären Aufstellung eingerichteten und/oder mobilen Unterkunft.

## Claims

1. **Separating toilet** (12) having a toilet housing (16), a urine collection tray (24), and a feces collection tray (26) for separately receiving urine and feces from a user of the separating toilet (12), wherein the urine collection tray (24) opens into a urine collection container (28) associated therewith, and the feces collection tray (26) opens into a feces collection container (30) associated therewith, wherein the separating toilet (12) has an agitator (36) for circulating the contents of the feces collection container (30), wherein the agitator (36) is arranged exclusively on the feces collection container (30) and not on the toilet housing (16), and can be removed from the toilet housing (16) together with the feces collection container (30), **characterized in that** corresponding guides are arranged on the feces collection container and on the toilet housing (16), which guides ensure that the feces collection container (30) automatically moves into the correct position during insertion.

2. Separating toilet according to claim 1, **characterized in that** a bearing for the agitator is arranged on the feces collection container (30).

3. Separating toilet according to one of the preceding claims, **characterized in that** an odor trap is arranged between the urine collection tray (24) and the urine collection container (28) for preventing odor-forming gases from passing from the urine collection container (28) to the urine collection tray (24).

4. Separating toilet according to claim 3, **characterized in that** the odor trap is formed as and/or has a mechanical non-return valve (32), wherein the non-return valve (32) is configured to open automatically when a minimum quantity of urine (50) is present for introduction into the urine collection container (28) and to close automatically otherwise.

5. Separating toilet according to claim 4, **characterized in that** the non-return valve (32) is designed and/or arranged so that it can be actuated by the gravitational force of the urine (50) present.

6. Separating toilet according to one of preceding claims 4 or 5, **characterized in that** the non-return valve (32) has an elastic line section (48).

7. Separating toilet according to one of the preceding claims, **characterized in that** the urine collection container (28) has an aeration opening (34).

8. Separating toilet according to one of preceding claims 4 through 7, **characterized in that** the urine collection tray (24) opens at its lowest point in the installed state into the non-return valve (32) or into a supply line leading to the non-return valve (32).

9. Separating toilet according to one of the preceding claims, **characterized in that** the toilet housing (16) is movable.

10. Separating toilet according to one of the preceding claims, **characterized in that** the urine collection tray (24) is tiltably and/or pivotably mounted on the remaining part of the separating toilet (12) - in particular, on the toilet housing (16) - and/or the feces collection tray (26) is tiltably and/or pivotably mounted on the toilet housing (16).

11. **Separating toilet system (10),** comprising a separating toilet (12) according to one of the preceding claims and a receiving chamber (14) for receiving the separating toilet (12).

12. Separating toilet system according to the preceding claim, **characterized in that** the receiving chamber (14) has a fan (42) - preferably an electric fan.

13. **Use** of a separating toilet (12) according to one of preceding claims 1 through 10 and/or a separating toilet system (10) according to one of claims 11 or 12 in a land, air, and/or water vehicle and/or in an accommodation configured for temporary installation and/or mobile accommodation.

## Revendications

1. **Toilette à séparation** (12) comportant un boîtier de toilette (16), une cuvette de collecte d'urine (24) et une cuvette de collecte de matières fécales (26) permettant de recevoir séparément l'urine et les matières fécales d'un utilisateur de la toilette à séparation (12), la cuvette de collecte d'urine (24) débouchant dans un réservoir de collecte d'urine (28) qui lui est associé et la cuvette de collecte de matières fécales (26) débouchant dans un réservoir de collecte de matières fécales (30) qui lui est associé, la toilette à séparation (12) présentant un agitateur (36) permettant de faire circuler le contenu du réservoir de collecte de matières fécales (30), l'agitateur (36) étant disposé exclusivement au niveau du réservoir de collecte de matières fécales (30) et non au niveau du boîtier de toilette (16) et pouvant être retiré du boîtier de toilette (16) conjointement avec le réservoir de collecte de matières fécales (30), **caractérisée en ce que** des guides correspondants sont disposés au niveau du réservoir de collecte de matières fécales et au niveau du boîtier de toilette (16), lesquels guides veillent à ce que le réservoir de collecte de matières fécales (30) vienne automatiquement dans la bonne position lors de l'insertion.

2. Toilette à séparation selon la revendication 1, **caractérisée en ce qu'**un palier pour l'agitateur est disposé au niveau du réservoir de collecte de matières fécales (30).

3. Toilette à séparation selon la revendication l'une des revendications précédentes, **caractérisée en ce qu'**un siphon permettant d'éviter le passage de gaz générateurs d'odeurs du réservoir de collecte d'urine (28) vers la cuvette de collecte d'urine (24) est disposé entre la cuvette de collecte d'urine (24) et le réservoir de collecte d'urine (28).

4. Toilette à séparation selon la revendication 3, **caractérisée en ce que** le siphon est réalisé sous la forme d'un clapet anti-retour (32) mécanique et/ou présente un tel clapet, le clapet anti-retour (32) étant conçu pour s'ouvrir automatiquement à partir de la présence d'une quantité minimale d'urine (50) destinée à être introduite dans le réservoir de collecte d'urine (28) et pour se fermer automatiquement dans le cas contraire.

5. Toilette à séparation selon la revendication 4, **caractérisée en ce que** le clapet anti-retour (32) est réalisé et/ou disposé de manière à pouvoir être actionné par la force de gravité de l'urine (50) présente.

6. Toilette à séparation selon l'une des revendications précédentes 4 ou 5, **caractérisée en ce que** le clapet anti-retour (32) présente une section de conduite élastique (48).

7. Toilette à séparation selon l'une des revendications précédentes, **caractérisée en ce que** le réservoir de collecte d'urine (28) présente une ouverture d'aération (34).

8. Toilette à séparation selon l'une des revendications précédentes 4 à 7, **caractérisée en ce que** la cuvette de collecte d'urine (24) débouche, à son point le plus bas à l'état monté, dans le clapet anti-retour (32) ou dans une conduite d'alimentation menant au clapet anti-retour (32).

9. Toilette à séparation selon l'une des revendications précédentes, **caractérisée en ce que** le boîtier de toilette (16) est mobile.

10. Toilette à séparation selon l'une des revendications précédentes, **caractérisée en ce que** la cuvette de collecte d'urine (24) est montée de manière basculante et/ou pivotante sur la toilette à séparation (12) restante, en particulier sur le boîtier de toilette (16), et/ou la cuvette de collecte de matières fécales (26) est montée de manière basculante et/ou pivotante sur le boîtier de toilette (16).

11. **Système de toilette à séparation (10),** comprenant une toilette à séparation (12) selon l'une des revendications précédentes et un espace de réception (14) permettant de recevoir la toilette à séparation (12).

12. Système de toilette à séparation selon la revendication précédente, **caractérisé en ce que** l'espace de réception (14) présente un ventilateur (42), de préférence électrique.

13. **Utilisation** d'une toilette à séparation (12) selon l'une des revendications précédentes 1 à 10 et/ou d'un système de toilette à séparation (10) selon l'une des revendications 11 ou 12 dans un véhicule terrestre, aérien et/ou maritime et/ou dans un logement mobile et/ou conçu pour une installation temporaire.
